# EUROPÄISCHE PATENTANMELDUNG

(11) **EP 1 422 393 A1**
(43) Veröffentlichungstag der Anmeldung: **26.05.2004**
(21) Anmeldenummer: 03026795.9
(22) Anmeldetag: 22.11.2003
(51) Int. Cl.: F01N 3/20, F02D 41/40

(54) **Verfahren zur Reduzierung der Emissionen von Ottomotoren**

(30) Priorität: 23.11.2002 DE 10254696
(71) Anmelder: ADAM OPEL AG, 65423 Rüsselsheim (DE)
(72) Erfinder: Hubig, Stefan, 66646 Urexweiler (DE); Oswald, Helmut, 55234 Albig (DE)

(57) **Zusammenfassung**

Die Erfindung betrifft ein Verfahren zur Reduzierung der Emissionen eines Ottomotors durch Zugabe von Kraftstoff in die Verbrennungsabgase, wobei während der Verbrennung des Kraftstoff/Luft-Gemisches, d.h. während des Expansionstaktes, eine zusätzliche Kraftstoffmenge in mindestens einen Zylinder eingespritzt wird. Hierdurch werden niedrigere Stickoxidemissionen in Verbindung mit SCR-Kat sowie ein günstigerer Kraftstoffverbrauch erreicht.

## Beschreibung

Die Erfindung bezieht sich auf das Gebiet der Verminderung von bei Verbrennungsmotoren entstehenden Primärschadstoffen. Insbesondere betrifft die Erfindung ein Verfahren zum Betrieb eines Ottomotors, bei dem die Stickoxidemissionen gesenkt werden.

Heutige Verbrennungsmotoren werden zum größten Teil mit fossilen Kraftstoffen betrieben. Hauptbestandteile dieser Kraftstoffe sind Kohlenstoff (C), Wasserstoff (H2) und Sauerstoff (02). Daneben sind geringe Mengen an Schwefel, Stickstoff, Asche und Wasser enthalten. Zur Verbrennung ist ein Gemisch aus Luft und Kraftstoff erforderlich. Luft ist ein Gasgemisch, das zu 21 Vol.-% aus Sauerstoff besteht. Die weiteren Bestandteile sind überwiegend Stickstoff sowie geringe Mengen von Edelgasen. Eine vollständige Verbrennung von 1 kg Kraftstoff erfordert etwa 14.6 kg Luft. Wird dem Motor exakt die zur vollständigen Verbrennung erforderliche Luftmenge zugeführt, spricht man von stöchiometrischem Gemisch. Das Verhältnis zwischen der tatsächlichen Luftmenge und dem theoretischen Luftbedarf zur vollständigen Verbrennung des Kraftstoffs wird durch das Luftverhältnis λ beschrieben, das der Quotient aus zugeführter Luftmenge und theoretischem Luftbedarf ist.

Bei stöchiometrischem Gemisch beträgt das Luftverhältnis λ = 1. Bei Luftüberschuss (λ > 1) spricht man von magerem Luftverhältnis, bei Luftmangel (λ < 1) von fettem Luftverhältnis. Bei einem homogenen Gemisch ist die Zündfähigkeit nur gewährleistet, wenn das Luftverhältnis etwa zwischen λ = 0,5 und λ = 1,4 liegt.

Bei der vollständigen Verbrennung von Kohlenwasserstoffen (HC) entstehen im Idealfall CO₂ und H₂O. Aufgrund nicht idealer Bedingungen enthält das reale motorische Abgas aber auch Produkte der unvollständigen Verbrennung wie CO, schwer oxidierbare Kohlenwasserstoffe sowie unverbrannten Sauerstoff. Zusätzlich entstehen Stickoxide, die als NOₓ bezeichnet werden.

Je nach Luftverhältnis können die Abgaskomponenten CO, HC und NOₓ mit einem dem Motor nachgeschalteten Drei-Wege-Katalysator erheblich verringert werden. Bei Luftverhältnissen λ ≥ 1 die Schadstoffe CO und HC praktisch nicht mehr im Abgas enthalten. Vielmehr werden diese zu den unschädlichen Verbindungen CO₂ und H₂O oxidiert. Bei λ < 1 ist eine Umwandlung mangels Sauerstoff als Reaktionspartner dagegen nicht möglich. Im Gegensatz hierzu kann eine Reduktion von Stickoxiden zu unschädlichem Stickstoff nur bei λ ≤ 1 erfolgen. Um alle drei Komponenten gleichzeitig verringern zu können, wird beim Ottomotor üblicherweise mit Hilfe einer Lambdaregelung ein etwa stöchiometrisches Luftverhältnis eingestellt.

Um bei mager laufenden Ottomotoren eine effektivere Reduzierung der Stickoxide zu ermöglichen, werden Drei-Wege-Katalysatoren in modernen Abgasreinigungssystemen mit einer zusätzlichen Speicherkomponenten für Stickoxide versehen. Diese sogenannten NOₓ-Speicher-Katalysatoren (NSK) besitzen zusätzlich zu den üblichen Edelmetallen auf dem Washcoat NOₓ₋Speicher-Materialien aus der Gruppe der Alkalimetalle (z. B. Kalium, Natrium), der Erdalkalimetalle (z. B. Barium, Calcium) oder der leichten Seltenen Erden (z. B. Lanthan, Cer) in Form des Oxids oder Carbonats. Diese Speichermaterialien sind in der Lage, im Abgas enthaltene Stickoxide während des Magerbetriebs zu binden (Adsorption). In regelmäßigen Abständen ist ein Wechsel zu fettem Luftverhältnis erforderlich, um die gespeicherten Nitrate wieder freizusetzen und zu reduzieren (Regeneration).

Nachteilig an dieser Art der Abgasreinigung ist die für die Regeneration des NOₓ-Speichers erforderliche periodische fette Betriebsweise, die den Kraftstoffverbrauch und die Emissionen an anderen Schadstoffen erhöht.

Zur Leistungssteigerung eines Abgasreinigungssystems aus Dreiwege-Katalysator und NO_{X}-Speicher schlägt die **DE 196 44 407 A1** (Daimler-Benz AG) vor, Kraftstoff in die Verbrennungsabgase zuzugeben, wobei nach der Verbrennung des Kraftstoff/Luft-Gemisches während des Auslasstaktes eine zusätzliche Kraftstoffmenge mittels eines Injektors in mindestens einen Zylinder nachträglich eingespritzt wird. Durch das Zusetzen der Kraftstoffmenge in das Abgas soll sichergestellt werden, dass der Dreiwege-Katalysator rascher auf eine Temperatur gebracht wird, die zur Einleitung und Aufrechterhaltung der Oxidation von Kohlenmonoxid und Kohlenwasserstoffen im Abgas führt.

Dieses Verfahren der Abgasreinigung verkürzt lediglich die "Anspringzeit" des Katalysators, ohne die Schadstoffemissionen während des Betriebs weiter zu begrenzen. Zudem wird auch das Problem des erhöhten Kraftstoffverbrauchs durch die zur Regeneration erforderliche temporäre fette Betriebsweise nicht gelöst.

Im Zuge der Verschärfung gesetzlicher Regelungen zur Reduzierung von Schadstoffen in Abgasen aus Verbrennungsmotoren ist es einerseits wünschenswert, die Schadstoffe aus dem Abgas weitestgehend zu entfernen, andererseits die Abgasmenge weitestgehend zu reduzieren, d.h. die vom Motor benötigte Kraftstoffmenge zu verringern.

Der vorliegenden Erfindung lag die Aufgabe zugrunde, ein Verfahren zum Betrieb eines Ottomotors, bereitzustellen, bei dem die Stickoxidemissionen gesenkt werden. Daneben sollte ein insgesamt verringerter Kraftstoffverbrauch erzielt werden.

Es wurde nun gefunden, dass die Kraftstoff-Nacheinspritzung in den Expansionstakt im Vergleich zu einer Einspritzung in den Ausschiebetakt zu verbesserten Abgaswerten führt.

Gegenstand der vorliegenden Erfindung ist daher ein Verfahren zur Reduzierung der Emissionen eines Ottomotors durch Zugabe von Kraftstoff in die Verbrennungsabgase, wobei eine zusätzliche Kraftstoffmenge während des Expansionstaktes in mindestens einen Zylinder eingespritzt wird.

Im Vergleich zur Einspritzung in den Ausschiebetakt werden verbesserte Abgaswerte erreicht. Die erfindungsgemäße Verfahrensweise lässt sich dabei mit den herkömmlichen Abgasreinigungssystemen aus Dreiwege-Katalysator und NOₓ-Speicher kombinieren. Besonders bevorzugt ist aber die Kombination eines erfindungsgemäß betriebenen Ottomotors mit einem SCR-Katalysator. Erfindungsgemäß bevorzugte Verfahren sind daher dadurch gekennzeichnet, dass der Ottomotor mit einem SCR-Katalysator verbunden ist.

Bei selektiv arbeitenden SCR-Katalysatoren (selective catalytic reduction) findet trotz sauerstoffhaltiger Atmosphäre eine reduzierende Reaktion an den im Abgas enthaltenen Stickoxiden statt. Hierzu ist der Einsatz eines Reduktionsmittels erforderlich. Bei den sogenannten "aktiven" SCR-Katalysatoren wird das Reduktionsmittel für die Stickoxide dem Abgas gezielt zugegeben, wodurch die ausgestoßenen Stickoxide zu N₂ und H₂O reduziert werden. Als Reduktionsmittel kommen Ammoniak, Harnstoff, wässrige Harnstofflösungen usw. in Betracht.

Bewährt hat sich diese Art der Reduktion von Stickoxidemissionen bei stationären Dieselmotoren. Hier ist in dem Abgasstrang des Verbrennungsmotors ein SCR-Katalysator angeordnet, wobei das dem Abgasstrom beizumengende NH₃ vor dem SCR-Katalysator durch Eindüsen dem Abgasstrom beigemengt wird. Das NH₃ wird bei solchen Anlagen als Gas oder als wässrige Lösung zugeführt. Bei einer Zuführung wässriger NH₃-Lösungen erfolgt eine thermolytische Aufspaltung im Abgasstrom bzw. im SCR-Katalysator, um das zur Reduktion der Stickoxide benötige NH₃ freizusetzen. Die Zuführung des Reduktionsmittels erfolgt über eine Dosiervorrichtung, welche in Abhängigkeit von der erwarteten NOₓ-Menge im Abgasstrom des Dieselaggregats eingestellt wird.

Aufgrund des nicht ungefährlichen Umganges mit NH₃ als Gas bzw. als wässrige Lösung ist man dazu übergegangen, das zur NOₓ-Reduktion benötigte NH₃ durch Zuführen von wässriger Harnstofflösung in den Abgasstrom bereitzustellen. Einem Einsatz wässriger Harnstofflösungen zur NOₓ-Reduktion von dieselmotorischen Abgasen bei mobilen Aggregaten, etwa bei Nutzfahrzeugen oder bei Personenkraftfahrzeugen steht zudem entgegen, dass der Gefrierpunkt eines solchen Reduktionsmittels bei etwa -13°C liegt. Ein wintertauglicher Einsatz dieses Reduktionsmittels ist daher nur durch eine Beimengung von gefrierpunktherabsetzenden Zusätzen möglich. Die Umsetzung dieser Zusätze im SCR-Katalysator kann jedoch zu einer Emission von unerwünschten Sekundärschadstoffen führen.

Ein Einsatz von mitgeführtem NH₃ in Druckflaschen oder als wässrige Lösung zur Entstickung mobiler Dieselaggregate ist aufgrund der von diesen Stoffen ausgehenden Gefährdung im Falle eines Unfalles nicht möglich.

Als Alternative wurde daher das passive SCR-System entwickelt, bei dem die innermotorisch erzeugten Abgaskomponenten HC und CO als Reduktionsmittel genutzt werden. Hierbei ist ein deutlicher Überschuss gegenüber den zu reduzierenden Stickoxiden erforderlich.

Das erfindungsgemäße Verfahren erlaubt auf einfache Weise die Bereitstellung ausreichender Mengen an Teilverbrennungsprodukten (HC und CO). Zusätzlich bewirkt die Kraftstoffeinspritzung in den Expansionstakt je nach Pulslage eine verstärkte Radikalbildung an unverbrannten Komponenten. Gegenüber der Einspritzung in den Ausschiebetakt werden höhere Radikalkonzentrationen im Abgas erreicht, die eine verstärkte NOₓ-Reduktion im SCR-Katalysator bewirken. Hierdurch wird eine insgesamt bessere Abgasreinigung erzielt.

Bevorzugt ist jedoch der Einsatz eines Ottomotors, der bereits über Injektoren im Bremsraum verfügt, weshalb erfindungsgemäße Verfahren, bei denen der Ottomotor über eine Benzindirekteinspritzung verfügt, bevorzugt sind.

Während bei konventionellen Ottomotoren die Zugabe des Kraftstoffs zur angesaugten Luft im Vergaser oder durch Einspritzung des Kraftstoffs in das Saugrohr und damit die Gemischbildung außerhalb des Brennraums erfolgt, wird der Kraftstoff Direkteinspritzung erst direkt in den Brennraum eingespritzt, nachdem zuvor die erforderliche Verbrennungsluft angesaugt wurde.

Benzinmotoren mit Direkteinspritzung können auf unterschiedliche Arten betrieben werden: Beim homogenen Betrieb wird der Kraftstoff während des Saughubes eingespritzt. Damit wird bis zum Zündzeitpunkt ein weitgehend homogenes Gemisch erzeugt. Gemischbildung und Verbrennungsablauf sind bei homogenem Betrieb einem konventionellen Motor mit Saugrohreinspritzung ähnlich.

Bei Betrieb mit der sogenannten Ladungsschichtung wird die Verbrennungsluft nahezu ungedrosselt angesaugt. Die Kraftstoff-Einspritzung erfolgt erst spät während des Kompressionshubs. Hierdurch wird nur im Bereich der Zündkerze eine Wolke mit einem zündfähigen Gemisch erzeugt, während sich im überwiegenden Teil des Brennraumes im Idealfall Luft und Restgas befindet. Je nach Brennverfahren sind im Leerlauf über den Brennraum gemittelte Luftverhältnisse bis λ = 8 möglich.

Der Betrieb mit Ladungsschichtung ist nur bei niedriger Last und Drehzahl möglich. Bei höherer Last und damit größerer eingespritzter Kraftstoffmenge wird die Gemischwolke bei Ladungsschichtung zunehmend fetter, was zu einer Verschlechterung des Emissionsverhaltens und zu Rußbildung führt. Bei höherer Last muss daher auf homogenen Betrieb umgestellt werden. Bei hohen Motordrehzahlen ist die Ladungsbewegung im Brennraum so groß, dass eine Ladungsschichtung nicht mehr realisiert werden kann, so dass auch in diesem Fall zu homogenem Betrieb gewechselt werden muss. Als maximale Motordrehzahl für den Betrieb mit Ladungsschichtung werden Werte um 3000 min⁻¹ genannt.

Um den Kraftstoffverbrauch zu senken, empfiehlt sich ein Motorbetrieb überwiegend mit Ladungsschichtung. Hier sind erfindungsgemäße Verfahren bevorzugt, bei denen die Einspritzung der zusätzlichen Kraftstoffmenge bei Betrieb des Ottomotors im Schichtbetrieb erfolgt.

Zwar ist es erfindungsgemäß möglich, auch bei mehrzylindrigen Ottomotoren lediglich einen Zylinder so zu steuern, dass dort eine Einspritzung einer zusätzlichen Kraftstoffmenge in den Expansionstakt erfolgt, bevorzugt ist jedoch der Betrieb jedes Zylinders mit der zusätzlichen Einspritzung. Da bei Benzinmotoren mit Direkteinspritzung ohnehin jeder Zylinder mit einem Injektor ausgerüstet ist, bedeutet diese Vorgehensweise keinerlei konstruktiven Mehraufwand. Erfindungsgemäß bevorzugte Verfahren sind daher dadurch gekennzeichnet, dass der Ottomotor mehrzylindrig ausgelegt ist und die Einspritzung der zusätzlichen Kraftstoffmenge in allen Zylindern des Ottomotors erfolgt.

Die Vorteile der erfindungsgemäßen Verfahrensweise kommen insbesondere bei mager laufenden Benzinmotoren zum Tragen. Hierdurch wird die Schadstoffemission weiter gesenkt. Es ist erfindungsgemäß vorteilhaft, den Ottomotor bei Luftüberschuss, d.h. bei λ > 1, zu betreiben. Hierbei können durchaus Werte von λ > 2 eingestellt werden, besonders bevorzugt sind Werte von 1,5 ≤ λ ≤ 4.

Erfindungsgemäße Verfahren, bei denen die Einspritzung der zusätzlichen Kraftstoffmenge bei Betrieb des Motors mit Luftüberschuss, d. h. bei λ > 1, erfolgt, sind bevorzugt.

Das erfindungsgemäße Verfahren ist über die herkömmliche Motorelektronik problemlos steuerbar, wobei die Einrichtungen zur Ermittlung der Mess- und Regelwerte sowie die Datenverarbeitung bei Motoren mit Benzindirekteinspritzung bereits vorhanden sind. In bevorzugten erfindungsgemäßen Verfahren wird der λ-Wert gemessen und daraus ein Signal gebildet, das einer Steuereinheit zuführbar ist, in welcher die Kraftstoffmenge für die Einspritzung der zusätzlichen Kraftstoffmenge berechnet wird.

## Patentansprüche

1. Verfahren zur Reduzierung der Emissionen eines Ottomotors durch Zugabe von Kraftstoff in die Verbrennungsabgase, **dadurch gekennzeichnet, dass** eine zusätzliche Kraftstoffmenge während des Expansionstaktes in mindestens einen Zylinder eingespritzt wird.

2. Verfahren nach Anspruch 1, **dadurch gekennzeichnet, dass** der Ottomotor mit einem SCR-Katalysator verbunden ist.

3. Verfahren nach einem der Ansprüche 1 oder 2, **dadurch gekennzeichnet, dass** der Ottomotor über eine Benzindirekteinspritzung verfügt.

4. Verfahren nach einem der Ansprüche 1 bis 3, **dadurch gekennzeichnet, dass** der Ottomotor mehrzylindrig ausgelegt ist und die Einspritzung der zusätzlichen Kraftstoffmenge in allen Zylindern des Ottomotors erfolgt.

5. Verfahren nach einem der Ansprüche 1 bis 4, **dadurch gekennzeichnet, dass** die Einspritzung der zusätzlichen Kraftstoffmenge bei Betrieb des Motors mit Luftüberschuss, d. h. bei λ > 1, erfolgt.

6. Verfahren nach einem der Ansprüche 1 bis 5, **dadurch gekennzeichnet, dass** die Einspritzung der zusätzlichen Kraftstoffmenge bei Betrieb des Ottomotors im Schichtbetrieb erfolgt.

7. Verfahren nach einem der Ansprüche 1 bis 6, **dadurch gekennzeichnet, dass** der λ-Wert gemessen und daraus ein Signal gebildet wird, das einer Steuereinheit zuführbar ist, in welcher die Kraftstoffmenge für die Einspritzung der zusätzlichen Kraftstoffmenge berechnet wird.
